# EUROPEAN PATENT APPLICATION

(11) **EP 3 547 753 A1**
(43) Date of publication of application: **02.10.2019**
(21) Application number: 19162186.1
(22) Date of filing: 30.04.2015
(51) Int. Cl.: H04W 36/00

(54) **CONFIGURING MEASUREMENT GAP IN WIRELESS COMMUNICATION SYSTEM USING CARRIER AGGREGATION**

(30) Priority: 30.04.2014 US 201461986123 P
(62) Divisional of application: 15786709.4
(71) Applicant: LG Electronics Inc., Seoul 07336 (KR)
(72) Inventor: YI, Yunjung, 137-893 Seoul (KR); AHN, Jonnkui, 137-893 Seoul (KR); JUNG, Sunghoon, 137-893 Seoul (KR)
(74) Representative: Ter Meer Steinmeister & Partner

(57) **Abstract**

A method and apparatus for configuring a measurement gap in a wireless communication system is provided. A network transmits a configuration of a measurement gap of a secondary cell group (SCG) in dual connectivity based on a timing of a primary cell (PCell) which belongs to a master cell group (MCG) in dual connectivity. A user equipment (UE) measures inter-frequency or inter-radio access technology (RAT) cells based on the received configuration of the measurement gap of the SCG. The measurement gap of the SCG may be configured as 7ms.

## Description

### BACKGROUND OF THE INVENTION

### Field of the Invention

The present invention relates to wireless communications, and more particularly, to a method and apparatus for configuring a measurement gap in a wireless communication system.

### Related Art

The 3GPP LTE is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

The 3GPP LTE may configure carrier aggregation (CA). In CA, two or more component carriers (CCs) are aggregated in order to support wider transmission bandwidths up to 100MHz. A user equipment (UE) may simultaneously receive or transmit on one or multiple CCs depending on its capabilities. In CA, one primary cell (PCell) and at least one secondary cell (SCell) may be configured.

Small cells using low power nodes are considered promising to cope with mobile traffic explosion, especially for hotspot deployments in indoor and outdoor scenarios. A low-power node generally means a node whose transmission power is lower than macro node and base station (BS) classes, for example pico and femto evolved NodeB (eNB) are both applicable. Small cell enhancements for evolved UMTS terrestrial radio access (E-UTRA) and evolved UMTS terrestrial radio access network (E-UTRAN) will focus on additional functionalities for enhanced performance in hotspot areas for indoor and outdoor using low power nodes.

One of potential solutions for small cell enhancement, dual connectivity (DC) has been discussed. Dual connectivity is used to refer to operation where a given UE consumes radio resources provided by at least two different network points connected with non-ideal backhaul. Furthermore, each eNB involved in dual connectivity for a UE may assume different roles. Those roles do not necessarily depend on the eNB's power class and can vary among UEs.

A method for configuring a measurement gap effectively may be required when CA or DC is configured.

### SUMMARY OF THE INVENTION

The present invention provides a method and apparatus for configuring a measurement gap in a wireless communication system. The present invention provides a method for configuring a measurement gap when dual connectivity (DC) is configured. The present invention provides a method for configuring a measurement gap when frequency division duplex (FDD)-time division duplex (TDD) carrier aggregation (CA) is configured.

In an aspect, a method for receiving, by a user equipment (UE), a configuration of a measurement gap in a wireless communication system is provided. The method includes receiving a configuration of a measurement gap of a secondary cell group (SCG) in dual connectivity based on a timing of a primary cell (PCell) which belongs to a master cell group (MCG) in dual connectivity, and measuring inter-frequency or inter-radio access technology (RAT) cells based on the received configuration of the measurement gap of the SCG.

In another aspect, a method for configuring, by a network, a measurement gap in a wireless communication system is provided. The method includes configuring a measurement gap of a secondary cell group (SCG) in dual connectivity based on a timing of a primary cell (PCell) which belongs to a master cell group (MCG) in dual connectivity, and transmitting the configured measurement gap of the SCG to a user equipment (UE).

A measurement gap can be configured effectively when carrier aggregation or dual connectivity is configured.

### BRIEF DESCRIPTION OF THE DRAWINGS

FIG. 1 shows a wireless communication system.
FIG. 2 shows structure of a radio frame of 3GPP LTE.
FIG. 3 shows a resource grid for one downlink slot.
FIG. 4 shows structure of a downlink subframe.
FIG. 5 shows structure of an uplink subframe.
FIG. 6 shows an example of different TDD UL-DL configurations between a PCell and SCell.
FIG. 7 shows an example of a measurement gap according to an embodiment of the present invention.
FIG. 8 shows another example of a measurement gap according to an embodiment of the present invention.
FIG. 9 shows an example of asynchronous dual connectivity.
FIG. 10 shows an example of a measurement gap for asynchronous dual connectivity according to an embodiment of the present invention.
FIG. 11 shows an example of a method for receiving a configuration of a measurement gap according to an embodiment of the present invention.
FIG. 12 shows an example of a method for configuring a measurement gap according to an embodiment of the present invention.
FIG. 13 shows a wireless communication system to implement an embodiment of the present invention.

### DESCRIPTION OF EXEMPLARY EMBODIMENTS

Techniques, apparatus and systems described herein may be used in various wireless access technologies such as code division multiple access (CDMA), frequency division multiple access (FDMA), time division multiple access (TDMA), orthogonal frequency division multiple access (OFDMA), single carrier frequency division multiple access (SC-FDMA), etc. The CDMA may be implemented with a radio technology such as universal terrestrial radio access (UTRA) or CDMA2000. The TDMA may be implemented with a radio technology such as global system for mobile communications (GSM)/general packet radio service (GPRS)/ enhanced data rates for GSM evolution (EDGE). The OFDMA may be implemented with a radio technology such as institute of electrical and electronics engineers (IEEE) 802.11 (Wi-Fi), IEEE 802.16 (WiMAX), IEEE 802-20, evolved-UTRA (E-UTRA) etc. The UTRA is a part of a universal mobile telecommunication system (UMTS). 3rd generation partnership project (3GPP) long term evolution (LTE) is a part of an evolved-UMTS (E-UMTS) using the E-UTRA. The 3GPP LTE employs the OFDMA in downlink (DL) and employs the SC-FDMA in uplink (UL). LTE-advance (LTE-A) is an evolution of the 3GPP LTE. For clarity, this application focuses on the 3GPP LTE/LTE-A. However, technical features of the present invention are not limited thereto.

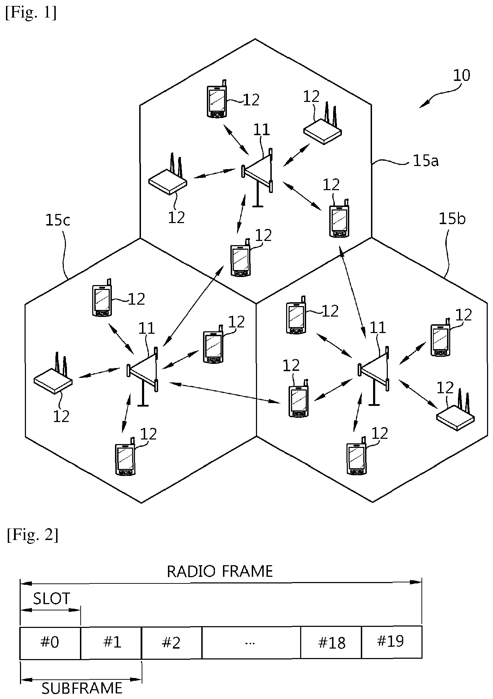

FIG. 1 shows a wireless communication system. The wireless communication system 10 includes at least one evolved NodeB (eNB) 11. Respective eNBs 11 provide a communication service to particular geographical areas 15a, 15b, and 15c (which are generally called cells). Each cell may be divided into a plurality of areas (which are called sectors). A user equipment (UE) 12 may be fixed or mobile and may be referred to by other names such as mobile station (MS), mobile terminal (MT), user terminal (UT), subscriber station (SS), wireless device, personal digital assistant (PDA), wireless modem, handheld device. The eNB 11 generally refers to a fixed station that communicates with the UE 12 and may be called by other names such as base station (BS), base transceiver system (BTS), access point (AP), etc.

In general, a UE belongs to one cell, and the cell to which a UE belongs is called a serving cell. An eNB providing a communication service to the serving cell is called a serving eNB. The wireless communication system is a cellular system, so a different cell adjacent to the serving cell exists. The different cell adjacent to the serving cell is called a neighbor cell. An eNB providing a communication service to the neighbor cell is called a neighbor eNB. The serving cell and the neighbor cell are relatively determined based on a UE.

This technique can be used for DL or UL. In general, DL refers to communication from the eNB 11 to the UE 12, and UL refers to communication from the UE 12 to the eNB 11. In DL, a transmitter may be part of the eNB 11 and a receiver may be part of the UE 12. In UL, a transmitter may be part of the UE 12 and a receiver may be part of the eNB 11.

The wireless communication system may be any one of a multiple-input multiple-output (MIMO) system, a multiple-input single-output (MISO) system, a single-input single-output (SISO) system, and a single-input multiple-output (SIMO) system. The MIMO system uses a plurality of transmission antennas and a plurality of reception antennas. The MISO system uses a plurality of transmission antennas and a single reception antenna. The SISO system uses a single transmission antenna and a single reception antenna. The SIMO system uses a single transmission antenna and a plurality of reception antennas. Hereinafter, a transmission antenna refers to a physical or logical antenna used for transmitting a signal or a stream, and a reception antenna refers to a physical or logical antenna used for receiving a signal or a stream.

FIG. 2 shows structure of a radio frame of 3GPP LTE. Referring to FIG. 2, a radio frame includes 10 subframes. A subframe includes two slots in time domain. A time for transmitting one subframe is defined as a transmission time interval (TTI). For example, one subframe may have a length of 1 ms, and one slot may have a length of 0.5 ms. One slot includes a plurality of orthogonal frequency division multiplexing (OFDM) symbols in time domain. Since the 3GPP LTE uses the OFDMA in the DL, the OFDM symbol is for representing one symbol period. The OFDM symbols may be called by other names depending on a multiple-access scheme. For example, when SC-FDMA is in use as a UL multi-access scheme, the OFDM symbols may be called SC-FDMA symbols. A resource block (RB) is a resource allocation unit, and includes a plurality of contiguous subcarriers in one slot. The structure of the radio frame is shown for exemplary purposes only. Thus, the number of subframes included in the radio frame or the number of slots included in the subframe or the number of OFDM symbols included in the slot may be modified in various manners.

The wireless communication system may be divided into a frequency division duplex (FDD) scheme and a time division duplex (TDD) scheme. According to the FDD scheme, UL transmission and DL transmission are made at different frequency bands. According to the TDD scheme, UL transmission and DL transmission are made during different periods of time at the same frequency band. A channel response of the TDD scheme is substantially reciprocal. This means that a DL channel response and a UL channel response are almost the same in a given frequency band. Thus, the TDD-based wireless communication system is advantageous in that the DL channel response can be obtained from the UL channel response. In the TDD scheme, the entire frequency band is time-divided for UL and DL transmissions, so a DL transmission by the eNB and a UL transmission by the UE cannot be simultaneously performed. In a TDD system in which a UL transmission and a DL transmission are discriminated in units of subframes, the UL transmission and the DL transmission are performed in different subframes.

Table 1 shows an example of TDD UL-DL configurations.

**<Table 1>**

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 1, for each subframe in a radio frame, "D" denotes the subframe is reserved for DL transmissions, "U" denotes the subframe is reserved for UL transmissions and "S" denotes a special subframe with the three fields downlink pilot time slot (DwPTS), guard period (GP) and uplink pilot time slot (UpPTS). UL-DL configurations with both 5ms and 10ms DL-to-UL switch-point periodicity are supported. In case of 5ms DL-to-UL switch-point periodicity, the special subframe exists in both half-frames. In case of 10ms DL-to-UL switch-point periodicity, the special subframe exists in the first half-frame only. Subframes 0 and 5 and DwPTS are always reserved for downlink transmission. UpPTS and the subframe immediately following the special subframe are always reserved for uplink transmission.

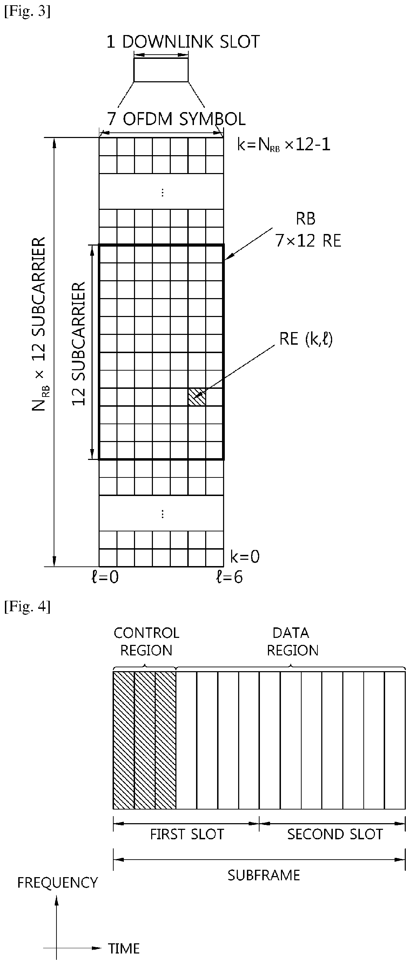

FIG. 3 shows a resource grid for one downlink slot. Referring to FIG. 3, a DL slot includes a plurality of OFDM symbols in time domain. It is described herein that one DL slot includes 7 OFDM symbols, and one RB includes 12 subcarriers in frequency domain as an example. However, the present invention is not limited thereto. Each element on the resource grid is referred to as a resource element (RE). One RB includes 12×7 resource elements. The number N^{DL} of RBs included in the DL slot depends on a DL transmit bandwidth. The structure of a UL slot may be same as that of the DL slot. The number of OFDM symbols and the number of subcarriers may vary depending on the length of a CP, frequency spacing, etc. For example, in case of a normal cyclic prefix (CP), the number of OFDM symbols is 7, and in case of an extended CP, the number of OFDM symbols is 6. One of 128, 256, 512, 1024, 1536, and 2048 may be selectively used as the number of subcarriers in one OFDM symbol.

FIG. 4 shows structure of a downlink subframe. Referring to FIG. 4, a maximum of three OFDM symbols located in a front portion of a first slot within a subframe correspond to a control region to be assigned with a control channel. The remaining OFDM symbols correspond to a data region to be assigned with a physical downlink shared chancel (PDSCH). Examples of DL control channels used in the 3GPP LTE includes a physical control format indicator channel (PCFICH), a physical downlink control channel (PDCCH), a physical hybrid automatic repeat request (HARQ) indicator channel (PHICH), etc. The PCFICH is transmitted at a first OFDM symbol of a subframe and carries information regarding the number of OFDM symbols used for transmission of control channels within the subframe. The PHICH is a response of UL transmission and carries a HARQ acknowledgment (ACK)/non-acknowledgment (NACK) signal. Control information transmitted through the PDCCH is referred to as downlink control information (DCI). The DCI includes UL or DL scheduling information or includes a UL transmit (Tx) power control command for arbitrary UE groups.

The PDCCH may carry a transport format and a resource allocation of a downlink shared channel (DL-SCH), resource allocation information of an uplink shared channel (UL-SCH), paging information on a paging channel (PCH), system information on the DL-SCH, a resource allocation of an upper-layer control message such as a random access response transmitted on the PDSCH, a set of Tx power control commands on individual UEs within an arbitrary UE group, a Tx power control command, activation of a voice over IP (VoIP), etc. A plurality of PDCCHs can be transmitted within a control region. The UE can monitor the plurality of PDCCHs. The PDCCH is transmitted on an aggregation of one or several consecutive control channel elements (CCEs). The CCE is a logical allocation unit used to provide the PDCCH with a coding rate based on a state of a radio channel. The CCE corresponds to a plurality of resource element groups.

A format of the PDCCH and the number of bits of the available PDCCH are determined according to a correlation between the number of CCEs and the coding rate provided by the CCEs. The eNB determines a PDCCH format according to a DCI to be transmitted to the UE, and attaches a cyclic redundancy check (CRC) to control information. The CRC is scrambled with a unique identifier (referred to as a radio network temporary identifier (RNTI)) according to an owner or usage of the PDCCH. If the PDCCH is for a specific UE, a unique identifier (e.g., cell-RNTI (C-RNTI)) of the UE may be scrambled to the CRC. Alternatively, if the PDCCH is for a paging message, a paging indicator identifier (e.g., paging-RNTI (P-RNTI)) may be scrambled to the CRC. If the PDCCH is for system information, a system information identifier and a system information RNTI (SI-RNTI) may be scrambled to the CRC. To indicate a random access response that is a response for transmission of a random access preamble of the UE, a random access-RNTI (RA-RNTI) may be scrambled to the CRC.

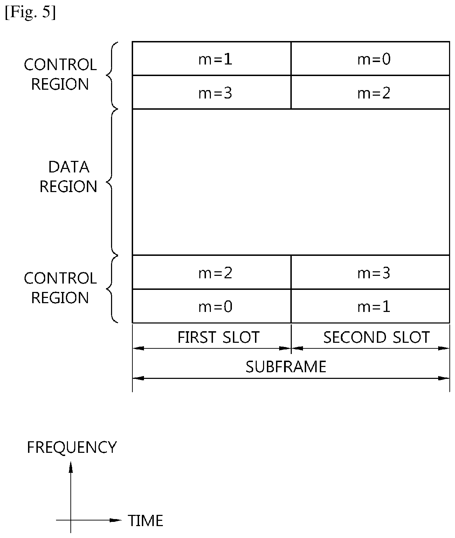

FIG. 5 shows structure of an uplink subframe. Referring to FIG. 5, a UL subframe can be divided in a frequency domain into a control region and a data region. The control region is allocated with a physical uplink control channel (PUCCH) for carrying UL control information. The data region is allocated with a physical uplink shared channel (PUSCH) for carrying user data. When indicated by a higher layer, the UE may support a simultaneous transmission of the PUSCH and the PUCCH. The PUCCH for one UE is allocated to an RB pair in a subframe. RBs belonging to the RB pair occupy different subcarriers in respective two slots. This is called that the RB pair allocated to the PUCCH is frequency-hopped in a slot boundary. This is said that the pair of RBs allocated to the PUCCH is frequency-hopped at the slot boundary. The UE can obtain a frequency diversity gain by transmitting UL control information through different subcarriers according to time.

UL control information transmitted on the PUCCH may include a HARQ ACK/NACK, a channel quality indicator (CQI) indicating the state of a DL channel, a scheduling request (SR), and the like. The PUSCH is mapped to a UL-SCH, a transport channel. UL data transmitted on the PUSCH may be a transport block, a data block for the UL-SCH transmitted during the TTI. The transport block may be user information. Or, the UL data may be multiplexed data. The multiplexed data may be data obtained by multiplexing the transport block for the UL-SCH and control information. For example, control information multiplexed to data may include a CQI, a precoding matrix indicator (PMI), an HARQ, a rank indicator (RI), or the like. Or the UL data may include only control information.

Carrier aggregation (CA) is described. It may be referred to Section 5.5 and 7.5 of 3GPP TS 36.300 V12.1.0 (2014-03). A UE with single timing advance (TA) capability for CA can simultaneously receive and/or transmit on multiple CCs corresponding to multiple serving cells sharing the same TA (multiple serving cells grouped in one timing advance group (TAG)). A UE with multiple TA capability for CA can simultaneously receive and/or transmit on multiple CCs corresponding to multiple serving cells with different TAs (multiple serving cells grouped in multiple TAGs). E-UTRAN ensures that each TAG contains at least one serving cell. A non-CA capable UE can receive on a single CC and transmit on a single CC corresponding to one serving cell only (one serving cell in one TAG). The CA is supported for both contiguous and non-contiguous CCs with each CC limited to a maximum of 110 resource blocks in the frequency domain.

It is possible to configure a UE to aggregate a different number of CCs originating from the same eNB and of possibly different bandwidths in the UL and the DL. The number of DL CCs that can be configured depends on the DL aggregation capability of the UE. The number of UL CCs that can be configured depends on the UL aggregation capability of the UE. It is not possible to configure a UE with more UL CCs than DL CCs. In typical time division duplex (TDD) deployments, the number of CCs and the bandwidth of each CC in UL and DL is the same. The number of TAGs that can be configured depends on the TAG capability of the UE. CCs originating from the same eNB need not to provide the same coverage.

When CA is configured, the UE only has one RRC connection with the network. At RRC connection establishment/re-establishment/handover, one serving cell provides the NAS mobility information (e.g. tracking area identity (TAI)), and at RRC connection re-establishment/handover, one serving cell provides the security input. This cell is referred to as the primary cell (PCell). In the DL, the carrier corresponding to the PCell is the DL primary CC (DL PCC), while in the UL, it is the UL primary CC (UL PCC).

Depending on UE capabilities, secondary cells (SCells) can be configured to form, together with the PCell, a set of serving cells. In the DL, the carrier corresponding to a SCell is a DL secondary CC (DL SCC), while in the UL, it is an UL secondary CC (UL SCC).

Therefore, the configured set of serving cells for a UE always consists of one PCell and one or more SCells. For each SCell, the usage of UL resources by the UE in addition to the DL resources is configurable (the number of DL SCCs configured is therefore always larger than or equal to the number of UL SCCs and no SCell can be configured for usage of UL resources only). From a UE viewpoint, each UL resource only belongs to one serving cell. The number of serving cells that can be configured depends on the aggregation capability of the UE. PCell can only be changed with handover procedure (i.e. with security key change and RACH procedure). PCell is used for transmission of PUCCH. Unlike SCells, PCell cannot be de-activated. Re-establishment is triggered when PCell experiences radio link failure (RLF), not when SCells experience RLF. NAS information is taken from PCell.

The reconfiguration, addition and removal of SCells can be performed by RRC. At intra-LTE handover, RRC can also add, remove, or reconfigure SCells for usage with the target PCell. When adding a new SCell, dedicated RRC signaling is used for sending all required system information of the SCell, i.e. while in connected mode, UEs need not acquire broadcasted system information directly from the SCells.

Dual connectivity (DC) is described. Dual connectivity is an operation where a given UE consumes radio resources provided by at least two different network points (master eNB (MeNB) and secondary eNB (SeNB)) connected with non-ideal backhaul while in RRC_CONNECTED. That is, the UE receives two kind of services by the dual connectivity. One of the services is received from the MeNB directly. The MeNB is an eNB which terminates at least S1-MME and therefore act as mobility anchor towards the core network (CN) in dual connectivity. The other service is received from the SeNB. The SeNB is an eNB which provides additional radio resources for the UE, which is not the MeNB, in dual connectivity. Further, the service may be moved between the macro eNB and SeNB depending on the UE's requirement or load status of the eNBs.

For dual connectivity, the UE may configured with two cell groups (CGs). A CG may only include cells that are associated to the same eNB and those cells are synchronized at the eNB level similar as for carrier aggregation. A master cell group (MCG) refers the group of the serving cells associated with the MeNB, comprising of the primary cell (PCell) and optionally one or more secondary cells (SCells). A secondary cell group (SCG) refers the group of the serving cells associated with the SeNB, comprising of primary SCell (PSCell) and optionally one or more SCells. Further, two operations, i.e. synchronous DC and asynchronous DC, are defined. In synchronous DC operation, the UE may cope with a maximum reception timing difference up to at least 33µs between CGs. In asynchronous DC operation, the UE may cope with a maximum reception timing difference up to 50µs between CGs.

UE measurement capability is described. It may be referred to Section 8.1.2.1 of 3GPP TS 36.133 V11.3.0 (2014-03). If the UE requires measurement gaps to identify and measure inter-frequency and/or inter radio access technology (RAT) cells, the E-UTRAN must provide a single measurement gap pattern with constant gap duration for concurrent monitoring of all frequency layers and RATs. During the measurement gaps, the UE shall not transmit any data, and is not expected to tune its receiver on any of the E-UTRAN carrier frequencies of PCell and SCell. In the UL subframe occurring immediately after the measurement gap, the E-UTRAN FDD UE shall not transmit any data, and the E-UTRAN TDD UE shall not transmit any data if the subframe occurring immediately before the measurement gap is a DL subframe.

Inter-frequency and inter-RAT measurement requirements rely on the UE being configured with one measurement gap pattern, unless the UE has signaled that it is capable of conducting such measurements without gaps. UEs shall only support those measurement gap patterns listed in Table 2 below that are relevant to its measurement capabilities.

**<Table 2>**

| Gap Pattern Id | MeasurementGap Length (MGL, ms) | Measurement Gap Repetition Period (MGRP, ms) | Minimum available time for inter-frequency and inter-RAT measurements during 480ms period (Tᵢₙₜₑᵣ₁, ms) | Measurement Purpose |
|---|---|---|---|---|
| 0 | 6 | 40 | 60 | Inter-Frequency E-UTRAN FDD and TDD, UTRAN FDD, GERAN, LCR TDD, HRPD, CDMA2000 1x |
| 1 | 6 | 80 | 30 | Inter-Frequency E-UTRAN FDD and TDD, UTRAN FDD, GERAN, LCR TDD, HRPD, CDMA2000 1x |

When inter-frequency reference signal time difference (RSTD) measurements are configured and the UE requires measurement gaps for performing such measurements, only gap pattern 0 can be used. For defining the inter-frequency and inter-RAT requirements Tᵢₙₜₑᵣ₁=30ms shall be assumed. A measurement gap starts at the end of the latest subframe occurring immediately before the measurement gap.

A UE that is capable of identifying and measuring inter-frequency and/or inter-RAT cells without gaps shall follow requirements as if gap pattern Id #0 had been used and the minimum available time Tᵢₙₜₑᵣ₁ of 60ms shall be assumed for the corresponding requirements. If the UE supporting E-UTRA carrier aggregation when configured with an SCC is performing measurements on cells on PCC, inter-frequency measurements, or inter-RAT measurements, and an interruption occurs on PCell due to measurements performed on cells on the SCC with a deactivated SCell, then the UE shall meet the requirements specified for each measurement.

When the UE needs a measurement gap, the UE can report its UE capability with *interFreqNeedForGaps* or *interRAT-NeedForGaps* per band and/or per band-combination. As described above, the current behavior regarding the measurement gap is that all serving cells shall perform service interruption during the measurement gap. In other words, the UE is not expected to receive or transmit any data during the measurement gap including measurement. From the UE measurement aspect, during the measurement gap, the UE is not expected to tune its radio frequency (RF) to any of serving carrier frequency.

Different situations, such as CA, multiple TAG, enhanced interference mitigation and traffic adaptation (eIMTA), different TDD and dual connectivity, etc., may need to be considered for applying and handling the measurement gap. More specifically, based on the current definition of service interruption at all serving cells, to reflect various scenarios described above, some clarification in terms of how to determine start/end of the measurement gap, as well as how to handle UL transmission or switching delay needs to be defined.

Hereinafter, various methods for configuring a measurement gap for various situations are described according to embodiments of the present invention.

### 1. Different TDD case

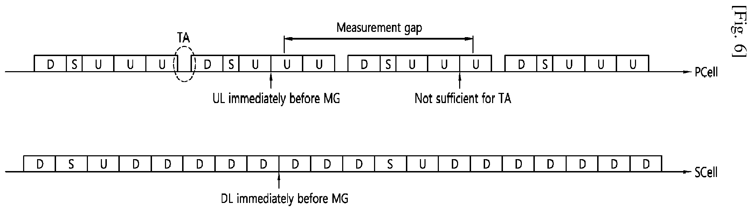

FIG. 6 shows an example of different TDD UL-DL configurations between a PCell and SCell. Referring to FIG. 6, the PCell is configured with UL-DL configuration 0, and the SCell is configured with UL-DL configuration 5. The measurement gap is configured by 6ms as described above in Table 2. A UL subframe is located immediately before the measurement gap in the PCell, and DL subframe is located immediately before the measurement gap in the SCell. Further, a UL subframe is located immediately after the measurement gap in the PCell, and DL subframe is located immediately after the measurement gap in the SCell.

When the PCell and SCell have different TDD UL-DL configurations from each other, UL subframe after the measurement gap or DL subframe after the measurement gap needs some handling to address DL->UL switching and TA adjustment with the measurement gap of 6ms. Depending on the exact timing where the measurement gap occurs, whether to handle UL or DL may be different. For example, it is assumed that the measurement gap starts aligned with DL reception time at any serving cell. In other words, the measurement gap may occur after completing DL reception, if any serving cell has DL subframe immediately before the measurement gap. There is a case where the sufficient time for TA is not reserved as shown above in FIG. 6.

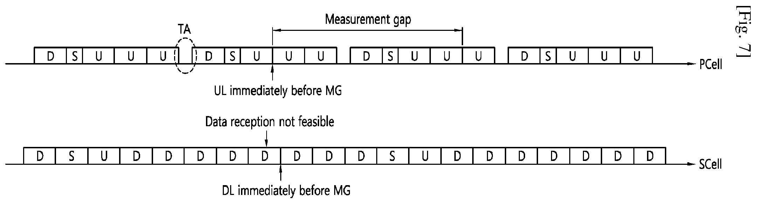

FIG. 7 shows an example of a measurement gap according to an embodiment of the present invention. Referring to FIG. 7, the measurement gap starts following the timing of the PCell. In other words, the measurement gap starts at the end of the latest subframe of the PCell occurring immediately before the measurement gap. Considering that the measurement gap starts based on the PCell timing, the E-UTRAN TDD UE may not transmit any data in any serving cell if the subframe occurring immediately before the measurement gap is a DL subframe in PCell. In this case, handling of multiple TAG (up to 32.46µs difference) may be handled by UE implementation. Further, the E-UTRAN TDD UE may not receive any data in any serving cell if the subframe occurring immediately before the measurement gap is a UL subframe in the PCell or the E-UTRAN TDD UE may not receive a few OFDM symbols in the overlapped portion between the measurement gap and DL subframe. Further, the UE may ignore or handle by implementation of timing difference between the PCell and any other SCell in CA.

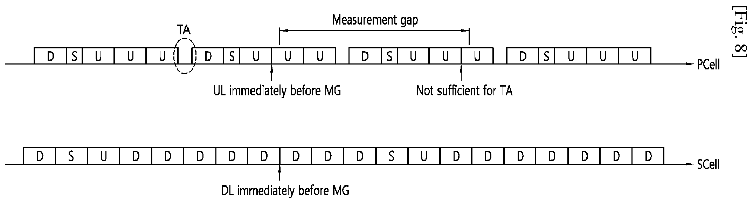

FIG. 8 shows another example of a measurement gap according to an embodiment of the present invention. Referring to FIG. 8, the measurement gap starts following any cell with DL subframe. In other words, the measurement gap starts at the end of the latest subframe of a cell occurring immediately before the measurement gap. More specifically, the cell may be the PCell if latest subframe of the PCell is a DL subframe or the PCell is FDD. Or, the cell may be a SCell if the latest subframe of the PCell is a UL subframe and the PCell is TDD, and the latest subframe of the SCell is a DL subframe or the SCell is FDD. In other words, the cell is a cell with DL subframe immediately before the measurement gap. Or, if all serving cells are TDD, and there is no DL subframe among serving cells for the latest subframe, the Cell is the PCell. This may be simplified by that the measurement gap starts at the end of the latest subframe of any serving cell occurring immediately before the measurement gap.

The E-UTRAN TDD UE may not transmit any data in any serving cell if the subframe occurring immediately before the measurement gap is a DL subframe in any serving cell. In terms of determining DL subframe, it may follow actual DL or UL, if eIMTA is configured. In other words, whether the subframe occurs immediately before the measurement gap may be used as DL or UL by a reconfiguration message and scheduling. In fallback mode, system information block (SIB)-linked DL/UL configuration may be used.

### 2. FDD/TDD CA case

In 3GPP rel-12, FDD-TDD CA, e.g., the PCell is configured by FDD and the SCell is configured by TDD, may be supported. Considering FDD-TDD CA, the configuration of the measurement gap needs to be clarified. In this case, multiple options may be considered as follows.
(1) Follow FDD case: That is, the E-UTRAN UE may not transmit any data in the UL subframe in any serving cell occurring immediately after the measurement gap. This may be applicable to all serving cell UL transmissions. In this case, the starting point of the measurement gap may be determined following the embodiment of the present invention described above in FIG. 8, i.e. the measurement gap starts at the end of the latest subframe of any serving cell occurring immediately before the measurement gap.
(2) Follow each carrier duplex mode: That is, the E-UTRAN UE may not transmit any data in the UL subframe occurring immediately after the measurement gap for FDD serving cell. The E-UTRAN UE may not transmit any data in the UL subframe occurring immediately after the measurement gap if the subframe occurring immediately before the measurement gap is a DL subframe in any TDD serving cells. This may be considered if the starting point of the measurement gap is determined based on any serving cell.
(3) Follow PCell: Considering that the measurement gap starts based on the PCell timing, which is described above in FIG. 7 according to an embodiment of the present invention, the E-UTRAN UE may not transmit any data in any serving cell if the subframe occurring immediately before the measurement gap is a DL subframe in the PCell. The E-UTRAN TDD and/or FDD UE may not transmit any data if the subframe occurring immediately before the measurement gap is a DL subframe in the PCell. Further, the E-UTRAN TDD UE may not receive any data in any serving cell if the subframe occurring immediately before the measurement gap is a UL subframe in the PCell or the E-UTRAN TDD UE may not receive a few OFDM symbols in the overlapped portion between the measurement gap and DL subframe. In this case, for the SCell, the measurement gap may reach up to 7ms rather than 6ms, actually. Thus, it is more natural to follow or start the measurement gap immediately after all the DL subframe ends in all serving cells rather than following the PCell timing.

In terms of determining DL subframe, it may follow actual DL or UL, if eIMTA is configured. In other words, whether the subframe occurs immediately before the measurement gap may be used as DL or UL by a reconfiguration message and scheduling. In fallback mode, SIB-linked DL/UL configuration may be used.

### 3. Dual connectivity case

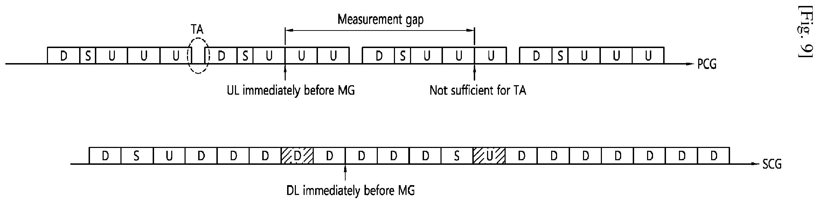

FIG. 9 shows an example of asynchronous dual connectivity. Referring to FIG. 9, MCG and SCG are not synchronized. The measurement gap is configured by 6ms as described above in Table 2. A UL subframe is located immediately before the measurement gap in the MCG, and DL subframe is located immediately before the measurement gap in the SCG. Due to frame boundary misalignment, timing reference where the measurement gap is based on needs to be determined.

It is assumed that the MCG informs the SCG of the measurement gap configured to the UE. It is further assumed that that the MCG and SCG know timing offset of each other so that aligned service interruption may be achieved. According to an embodiment of the present invention, the PCell timing is used as a timing reference for configuring the measurement gap. In a subframe of the SCG which overlaps with the measurement gap according to the PCell timing, if the subframe of the SCG is entirely overlapped with the measurement gap, the UE may expect that SCG will not schedule any data or the UE may not transmit any data in that subframe. In a subframe of the SCG which overlaps with the measurement gap according to the PCell timing, if the subframe of the SCG is partially overlapped with the measurement gap such, as descried above in FIG. 9, to support inaccurate timing offset information between MCG/SCG as well as timing offset drift, the UE may not expect any data reception or transmission in those partially overlapped subframes as well. Consequently, from SCG perspective, the measurement gap may reach up to 7ms.

More generally, regardless of synchronous or asynchronous dual connectivity between MCG/SCG, the SCG may assume that measurement gap is configured in any subframe with overlaps with the measurement gap of the MCG/PCell. Or, the measurement gap may depend on the timing offset value. If the offset value is zero, only the measurement gap of 6ms may be used for the SCG as well aligned with MCG subframe number. In this case, handling is same as CA case (such as FDD-TDD CA).

Another example is that a UE may assume the measurement gap of 7ms for the SCG when the UE is configured with DC power control mode 2 or the UE is configured to apply the measurement gap in asynchronous dual connectivity (i.e., 7ms for the SCG), which is configured in case that the networks are not synchronized. If the UE supports both synchronous dual connectivity and asynchronous dual connectivity and if the higher layer parameter *DC-PowerControlMode* does not indicate dual connectivity power control mode 1, the UE may use the DC power control mode 2. Alternatively, whether to use the measurement gap of 7ms or 6ms for the SCG may be configured by the network.

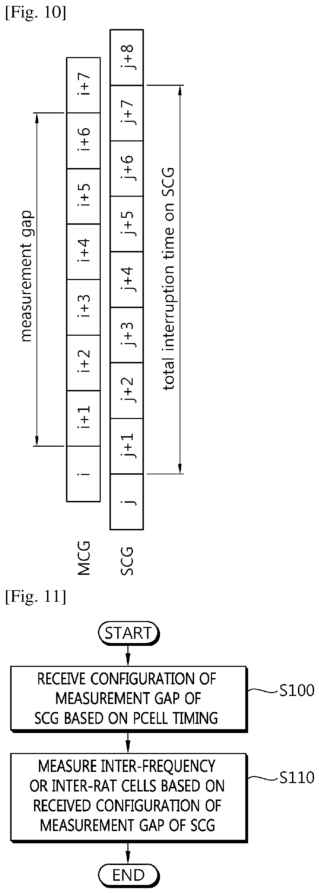

FIG. 10 shows an example of a measurement gap for asynchronous dual connectivity according to an embodiment of the present invention. Referring to FIG. 10, the total interruption time on the SCG is 7 subframes for asynchronous dual connectivity. More specifically, MCG subframes from i+1 to i+6 are included in total interruption time, together with SCG subframes from j+1 to j+7 for asynchronous dual connectivity.

FIG. 11 shows an example of a method for receiving a configuration of a measurement gap according to an embodiment of the present invention. In step S100, the UE receives a configuration of a measurement gap of a SCG in dual connectivity based on a timing of a PCell which belongs to a MCG in dual connectivity. In step S110, the UE measures inter-frequency or inter-RAT cells based on the received configuration of the measurement gap of the SCG. The measurement gap of the SCG may be configured as 7ms. That is, two subframes of the SCG may be partially overlapped with a measurement gap of the MCG. The dual connectivity between the MCG and the SCG may be asynchronous.

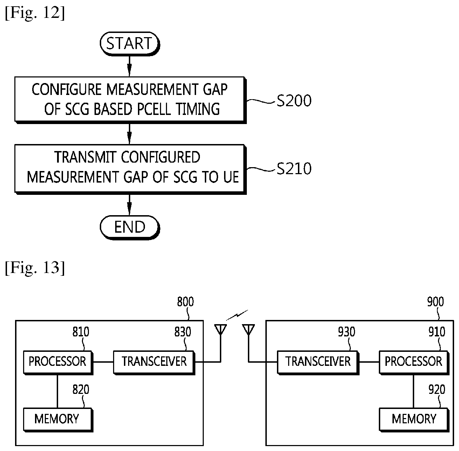

FIG. 12 shows an example of a method for configuring a measurement gap according to an embodiment of the present invention. In step S200, the network configures a measurement gap of a SCG in dual connectivity based on a timing of a PCell which belongs to a MCG in dual connectivity. In step S210, the network transmits the configured measurement gap of the SCG to a UE. The measurement gap of the SCG may be configured as 7ms. That is, two subframes of the SCG may be partially overlapped with a measurement gap of the MCG. The dual connectivity between the MCG and the SCG may be asynchronous.

Hereinafter, a measurement gap optimization according to an embodiment of the present invention is described. Considering that a UE may support more carriers in near future, overhead of the measurement gap configuration may increase proportionally with the configured number of carriers. Unless it is necessary to stop service in all serving cells, it is worthwhile to consider halt the least number of serving cells as much as possible. Depending on UE capability, the service interruption in all serving cells may not be necessary. Furthermore, when a UE is configured with dual connectivity, this may impose significant overhead on SeNB which may require certain coordination to impose scheduling restriction. Accordingly, a method for configuring independent measurement gap and service interruption per serving cell may be required.

### (1) UE signaling on "interruption necessary carriers"

When a UE is configured with a measurement gap configuration, the UE may inform the network which serving cells should be halted. This may be different from UE capability in a sense that this may be reported only if the measurement gap is configured. For example, a UE is configured with CC1/CC2, and when the UE is configured with the measurement gap, the UE may inform the network which carrier should be interrupted. Additionally, the duration of interruption may also be signaled. When the network receives the interruption requirement, the network may further configure whether each CC not requiring interruption will not be interrupted or not. In other words, the list of carriers which would be interrupted may be signaled to the UE. Or, the interruption necessity may be signaled at UE capability signaling.

### (2) Separate measurement gap per carrier

Depending on UE capability, the network may determine which serving will be halted. Furthermore, different measurement gap pattern may be configured per serving cell. However, in this case, the measurement gap pattern between serving cells may be overlapped. In other words, a measurement gap pattern for one serving cell may be a subset of another measurement gap pattern for another serving cell. One example to achieve this is to reduce the measurement gap from 6ms to e.g., 1ms. Considering the complexity, it is desirable to limit the number of configurable measurement gap patterns for each pattern as the following. For example, if a UE is configured with gap pattern Id=0 with offset 0, the UE may be configured with gap pattern Id=3 with offset 0 or no gap. In other words, only shorter measurement gap with same periodicity and offset may be configurable for another serving cell or no gap configuration is feasible. Table 3 shows an example of measurement gap patterns according to an embodiment of the present invention.

**<Table 3>**

| Gap Pattern Id | MeasurementGap Length (MGL, ms) | Measurement Gap Repetition Period (MGRP, ms) | Minimum available time for inter-frequency and inter-RAT measurements during 480ms period (Tᵢₙₜₑᵣ₁, ms) | Measurement Purpose |
|---|---|---|---|---|
| 0 | 6 | 40 | 60 | Inter-Frequency E-UTRAN FDD and TDD, UTRAN FDD, GERAN, LCR TDD, HRPD, CDMA2000 1x |
| 1 | 6 | 80 | 30 | Inter-Frequency E-UTRAN FDD and TDD, UTRAN FDD, GERAN, LCR TDD, HRPD, CDMA2000 1x |
| 2 | 1 | 40 | 60 | Inter-Frequency E-UTRAN FDD and TDD, UTRAN FDD, GERAN, LCR TDD, HRPD, CDMA2000 1x |
| 3 | 1 | 80 | 30 | Inter-Frequency E-UTRAN FDD and TDD, UTRAN FDD, GERAN, LCR TDD, HRPD, CDMA2000 1x |

### (3) Handling short-term service interruption

For example, if a UE is equipped with two independent RF/RX chains, when one unused RF/RX chain is available, the unused RX chain may be used for inter-frequency measurement without interrupting the other RF/RX operation. In this case, based on the UE capability signaling, the network may not configure the measurement gap. However, since even unused RF/RX may require short-term service interruption at the other RF/RX chain due to its implementation characteristics, the UE may still report the necessity of the measurement gap. When the UE reports such a capability (such as short gap is needed), rather than configuring measurement gap, the network may inform the UE or configure a set of subframes or period/offset where those interruptions may be achieved. Whether the UE will use those subframes or not may depend on its measurement requirements. For example, instead of configuring the measurement gap, the network may configure a period of 80ms and offset of 4ms, which means that every 80ms with 4ms offset, one subframe from the PCell may be assumed as "no DL subframe" where the UE may halt the reception on the PCell or transmission to the PCell during one-subframe. The packet loss or data loss in that subframe may be treated based on retransmission mechanism rather than mandating the UE not receiving any data in that subframe. Depending on UE capability and autonomous gap configuration, the UE may or may not listen on the serving frequency.

### (4) Measurement gap necessity per band-combination

Whether a UE needs the measurement gap per band-combination may be signaled. When a UE indicates that the measurement gap is not needed for a band-combination (e.g., CC1, CC2, CC3), the network may assume that if the UE is configured with only CC1, CC2, then CC3 may be measured without the measurement gap. Thus, at least for measurement on CC3, the UE may perform measurement without the measurement gap. If a UE indicates no measurement gap also for (CC4, CC5), whereas the UE indicates need of the measurement gap for (CC1, CC2, CC3, CC4, CC5), then the network should not assume that CC4/CC5 may also be measured without the measurement gap. In such a case, the network may configure the UE to monitor CC3 frequency only without configuring the measurement gap or configure the measurement gap for other frequencies as well.

FIG. 13 shows a wireless communication system to implement an embodiment of the present invention.

An eNB 800 may include a processor 810, a memory 820 and a transceiver 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The transceiver 830 is operatively coupled with the processor 810, and transmits and/or receives a radio signal.

A UE 900 may include a processor 910, a memory 920 and a transceiver 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The transceiver 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The transceivers 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

### It follows a list of examples

1. A method for receiving, by a user equipment (UE), a configuration of a measurement gap in a wireless communication system, the method comprising: receiving a configuration of a measurement gap of a secondary cell group (SCG) in dual connectivity based on a timing of a primary cell (PCell) which belongs to a master cell group (MCG) in dual connectivity; and measuring inter-frequency or inter-radio access technology (RAT) cells based on the received configuration of the measurement gap of the SCG.
2. The method of example 1, wherein the measurement gap of the SCG is configured as 7ms.
3. The method of example 2, wherein two subframes of the SCG are partially overlapped with a measurement gap of the MCG.
4. The method of example, 1, further comprising receiving a configuration of a measurement gap of the MCG in dual connectivity.
5. The method of example 4, wherein the measurement gap of the MCG is configured as 6ms.
6. The method of example 1, wherein the dual connectivity between the MCG and the SCG is asynchronous dual connectivity.
7. The method of example 6, wherein a reception timing difference between the MCG and the SCG is more than 33µs in the asynchronous dual connectivity.
8. The method of example 6, wherein the asynchronous dual connectivity is configured by a network.
9. A method for configuring, by a network, a measurement gap in a wireless communication system, the method comprising: configuring a measurement gap of a secondary cell group (SCG) in dual connectivity based on a timing of a primary cell (PCell) which belongs to a master cell group (MCG) in dual connectivity; and transmitting the configured measurement gap of the SCG to a user equipment (UE).
10. The method of example 9, wherein the measurement gap of the SCG is configured as 7ms.
11. The method of example 10, wherein two subframes of the SCG are partially overlapped with a measurement gap of the MCG.
12. The method of claim 9, wherein the measurement gap of the MCG is configured as 6ms.
13. The method of example 9, wherein the dual connectivity between the MCG and the SCG is asynchronous dual connectivity.
14. The method of example 13, wherein a reception timing difference between the MCG and the SCG is more than 33µs in the asynchronous dual connectivity.
15. The method of example 13, wherein the asynchronous dual connectivity is configured by a network.

## Claims

1. A method for performing measurement by a user equipment, UE, (900) in a wireless communication system, the method comprising:
transmitting information which serving cells, among a plurality of serving cells to be interrupted, when the UE (900) is configured with a measurement gap configuration;
receiving a list of serving cells to be interrupted; and
performing the measurement per each of the serving cells of the list of serving cells during the measurement gap per each of the at least one serving cell.

2. The method of claim 1, wherein any data is not transmitted or received on each of the at least one serving cell during the measurement gap per each of the at least one serving cell.

3. The method of claims 1 or 2, wherein the measurement gap per each of the at least one serving cell is different from each other.

4. The method of any claims 1 to 3, wherein the measurement gap per each of the at least one serving cell is overlapped with from each other.

5. The method of any claims 1 to 4, further comprising transmitting information on a serving cell, among the plurality of serving cells, requiring a shorter service interruption duration which is shorter than the measurement gap.

6. A user equipment, UE, (900) in a wireless communication system, the UE comprising:
a memory (920);
a transceiver (930); and
a processor (910), operably coupled to the memory (920) and the transceiver (930), configured to:
control the transceiver (930) to transmit information which serving cells, among a plurality of serving cells to be interrupted, when the UE (900) is configured with a measurement gap configuration,
control the transceiver (930) to receive a list of serving cells to be interrupted, and
control the transceiver (930) to perform measurement per each of the serving cells of the list of serving cells during the measurement gap per each of the at least one serving cell.

7. The UE (900) of claim 6, wherein the processor (910) is further configured to carry out the method of any claims 2 to 5.
